(19)

Europäisches
Patentamt
European
Patent Office
Office européen
des brevets

(11) **EP 2 597 632 A2**

(12) **EUROPEAN PATENT APPLICATION**
published in accordance with Art. 153(4) EPC

(43) Date of publication:
**29.05.2013 Bulletin 2013/22**

(21) Application number: **11809939.9**

(22) Date of filing: **19.07.2011**

(51) Int Cl.:
***G08G 1/052*** *(2006.01)*

(86) International application number:
**PCT/RU2011/000530**

(87) International publication number:
**WO 2012/011846 (26.01.2012 Gazette 2012/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.07.2010 RU 2010129883**

(71) Applicant: **Obschestvo S Ogranichennoi
Otvetstvennostyu
"Tekhnologii Raspoznavaniya"
Moscow 109004 (RU)**

(72) Inventors:
• **ZARUBIN, Yury Leonidovich
Moscow 121069 (RU)**

• **UBOZHENKO, Nikolai Vitalievich
Lesnoi 141231 (RU)**
• **STUKALOV, Dmitry Anatolievich
Pushkino 141200 (RU)**
• **VOVK, Maksim Anatolievich
Chekhov 142300 (RU)**
• **AISTOV, Aleksei Anatolievich
Moscow 117335 (RU)**

(74) Representative: **Games, Robert Harland et al
Albright Patents LLP
Eagle Tower
Montpellier Drive
Cheltenham GL50 1TA (GB)**

(54) **METHOD FOR DETERMINING THE SPEED OF A VEHICLE**

(57) The present invention relates to control and measuring technology and can be used for controlling road traffic and overspeed violations of vehicles, moving in a dense flow of traffic, with a definite identification of the measured speed with the vehicle. According to this method, frames with the image of the vehicle number plate are registered during its movement in the control zone of the camera. In addition, the parameters of the camera position relatively to the road plane are measured. The number plate corner and centre point coordinates are measured in the frame coordinate system at the beginning and at the end of the control zone and, using the centre point of the number plate at the beginning and at the end of the control zone, the direction of the number plate movement in the road coordinate system is calculated. Later, the value of the number plate centre point movement is calculated, which is located in the plane, parallel to the road plane, at the height of the vehicle number plate movement. Using the distance value mentioned above and the time taken for the plate to move, the vehicle speed is calculated. This method helps to make the system of its implementation easier and cheaper, as it requires only one type of equipment - a video camera, both for number plate recognition and vehicle speed measurement.

Fig.1

EP 2 597 632 A2

## Description

### Field of the invention

The present invention relates to a control and measuring method and can be used for controlling road traffic, overspeed violations etc.

### Background of the invention

Nowadays, methods based on probing a highway sector by radar speed guns are widely used by Road Inspection Services. The speed is measured by the change of the features of the signal, reflected from the moving vehicle, for example, frequency changes.

However, this method does not make it possible to identify the vehicle, that is cannot recognize the number plate of the vehicle and therefore, identify it with its owner.

A special method, using video cameras that are placed along the road at the vehicle path, is used for recognizing the overspeed violator number plate.

This method for speed measurement was chosen as a prototype. The method implies radiating electromagnetic radiation pulses to the line of the vehicles moving along the highway, reception of the reflected E-field radiation, calculating the vehicle speed by comparing the parameters of the radiated and receipted pulses as well as comparing the measured vehicle speed with the speed limit at the road sector, forming a signal to recognize the number plate of the violative vehicle with the help of a recognition camera once overspeeding is registered, vehicle identification and overspeed violation automatic registration; the radar speed guns radiate pulses simultaneously with the recording of the same sector of the highway with the help of a camera of panoramic view, the coordinates and the speed of the vehicles, moving in the frame, are calculated and afterwards, the dataflows of the speed value and the coordinates of all the vehicles at that particular moment on the chosen roadway sector which is obtained by the radar speed gun and the panoramic view camera are compared; the radar speed gun measurements are used to get metrologically correct data of the speed and coordinates of the vehicle, while to obtain valid data of the coordinates of the same vehicle the measures of the panoramic view camera are used; every overspeed violating vehicle is tracked until the number plate is recognized and afterwards, the number plate recognition camera generates the frame of the violator's vehicle with recognized number plate, data, time, registered speed and video camera identification, which makes it possible to perform an automatic registration of traffic regulation violations.

However, this method, as described above, requires separate equipment for speed measurement and number plate recognition.

### Summary of the invention

The technical objective of this invention is creating a method for vehicle speed measurement, moving in dense flow of traffic, with a definite identification of the measured speed with the vehicle. Since this method is based on one type of equipment - a video camera for both number plate recognition and speed measurement - it makes the implementation of this method easier and cheaper.

This object is achieved by a method for vehicle speed measurement, which consists in placing a video camera on the vehicle path and saving the frames with the image of the vehicle number plate when it is moving through the camera control zone, which is notable for pre-measuring the camera position parameters relatively to the road plane, saving the frames, obtained at the beginning and at the end of the camera control zone; calculating the period between the first and the last frame; measuring the number plate corner and centre point coordinates in the frame coordinate system at the beginning and at the end of the control zone; converting the number plate corner and centre point coordinates from the frame coordinate system to the road coordinate system taking into account the camera position parameters relatively to the road plane; defining the number plate movement direction in the road coordinate system using the number plate centre point coordinates at the beginning and at the end of the control zone; adjusting the size of the visible number plate image on the frames taking into account the number plate movement direction; comparing the adjusted number plate size with the standard number plate size value and, using the results, calculating the height of the number plate centre point relatively to the road plane; converting the number plate corner and centre point coordinates from the frame coordinate system to the road coordinate system in the plane, parallel to the road plane and located at the height of the number plate centre point; defining the distance passed by the number plate centre point in the plane mentioned; calculating the vehicle speed using the distance passed by number plate centre point and the time, taken for the number plate to perform this move, which corresponds to the period between the first and the last frames.

So long as overspeed violation fixation implies speed measurement, violation detection, number plate recognition, resolution and fine receipt writing, evidently, using one piece of equipment for both number plate recognition and vehicle speed measurement makes it possible to achieve the set goals and remedy the deficiencies of the traditional systems.

### Brief description of the drawings

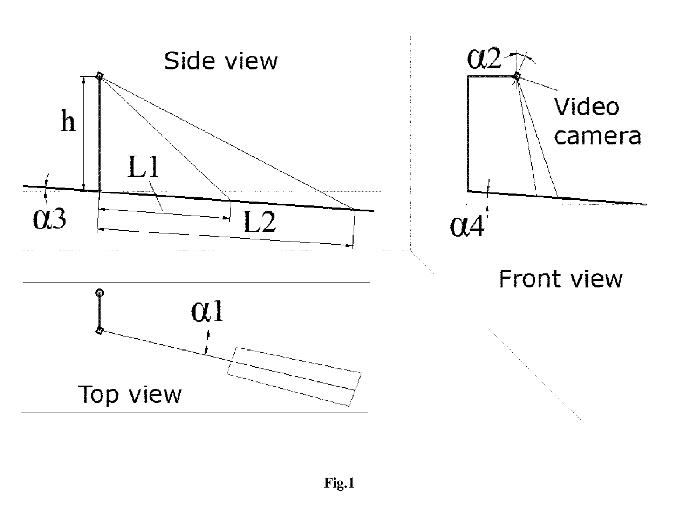

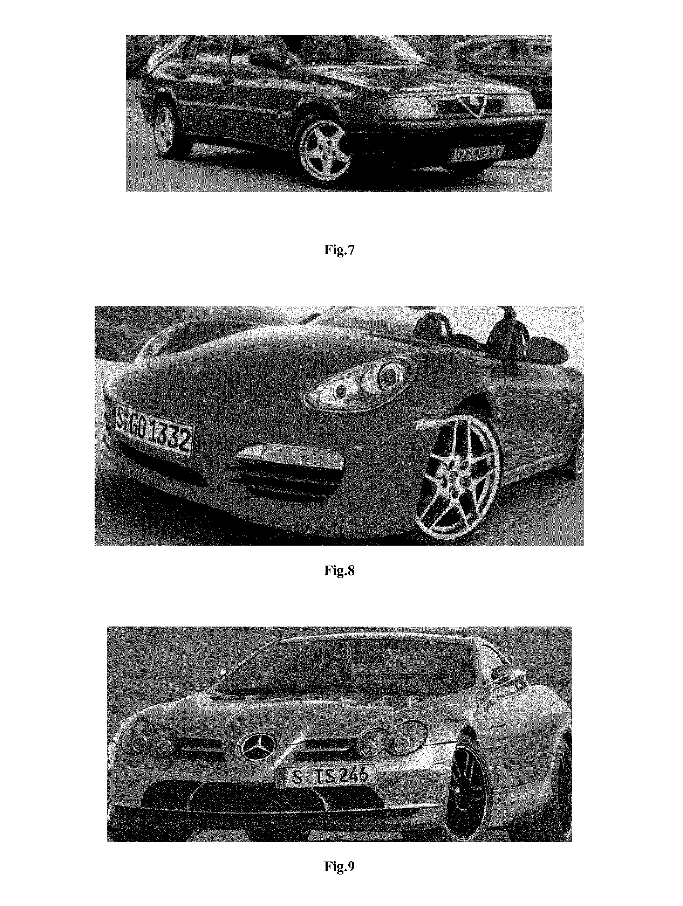

The proposed method is illustrated by fig. 1-9.

A vehicle speed measurement is achieved in the following way.

Firstly, the number plates are recognized by the camera. Previously the camera position parameters in the space relatively to the highway are measured. Further, two frames - vehicle photo images - are formed and saved at the beginning and at the end of the control zone when the vehicle is moving through it. These frames are used to recognize the number plate of the vehicle and the geometrical parameters of the number plate in the frame coordinate system (the number plate centre and corner point coordinates, the number plate shape distortion from the regular rectangle) are defined; the number plate corner and centre point coordinates in the frame coordinate system at the beginning and at the end of the control zone are measured; the number plate centre and corner points coordinates are converted from the frame coordinate system to the road coordinate system, taking into account the parameters of the camera position relatively to the road plane; the direction of the number plate movement in the road coordinate system is defined using the number plate centre points at the beginning and at the end of the control zone; the size of the visible number plate frame image is adjusted according to the direction of the number plate movement; the adjusted number plate size is compared with the standard one and the results are used to define the height at which the number plate is moving relatively to the road plane; the number plate corner and centre point coordinates are converted from the frame coordinate system to the road coordinate system to the plane, parallel to the road plane and located at the height of the number plate central point; the distance of the number plate centre point moved in the plane mentioned above is defined and, finally, the vehicle speed is measured using the distance passed by the number plate centre point and the period taken by the plate to pass this distance.

It is necessary to define the distance covered by the vehicle and the time taken for the vehicle to cover the distance to measure the vehicle speed. The camera records the vehicle position in the control zone twice, so that there are at least two frames with the vehicle and its number plate. For each frame the time of its registration is saved which is the time of the vehicle being in the given point. To measure the distance, covered by the vehicle on the road, it is essential to take a point of reference at the frame at the start and end moment, to convert its coordinates from the frame coordinate system to the road coordinate system and to calculate the distance between these two points on the road coordinate system. The number plate centre is used as the point of reference as the coordinates of this point can be calculated with high accuracy. To convert the coordinates from the frame coordinate system to the road coordinate system it is essential to know the positional relationship of the camera and the number plate.

The road, on which the vehicles move, can have either transverse or longitudinal tilt. The vehicles do not always move exactly along the line, but with some angle. The number plate can be located at a different height above the road, may not be located at the front-face of the vehicle or have other features of vehicle fixation. The camera itself has some slope to the road plane, and it can be located not exactly above the line centre, but a little to the side, with an angle to the horizontal plane of the vehicle trajectory. Moreover, when placing the camera a certain roll may appear if the fixation is not straight vertical but with some angle to the vertical. All these factors have to be taken into account for correct coordinate conversion.

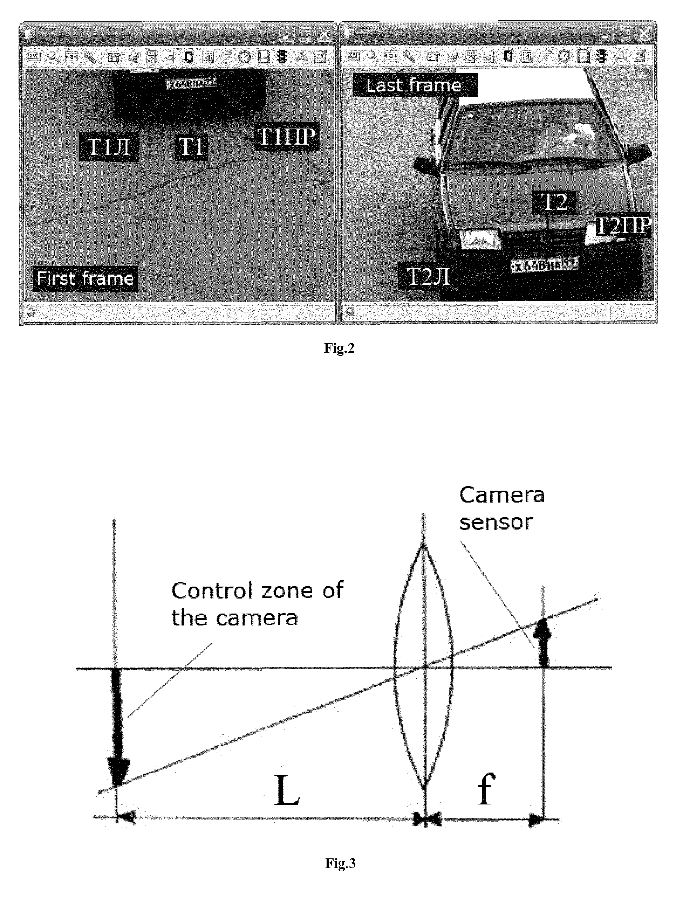

1. Previously the following parameters of the camera are measured relatively to the road plane.
● The camera suspension height above the road, h (fig.1.1)
● The distance between the camera projection point on the road and the beginning of the control zone, $L_1$ (fig.1.2)
● The distance between the camera projection point on the road to the end of the control zone, $L_2$ (fig.1.3)
● Angle of the camera turn in horizontal plane from the road direction line, $\alpha_1$ (fig. 1.4)
● Angle of the camera roll - deflection from the vertical, $\alpha_2$ (fig.1.5)
● Angle of the road longitudinal slope, $\alpha 3$ (fig.1.6)
● Angle of the road cross slope, $\alpha_4$ (fig. 1.7)
2. For each vehicle, passing through the camera control zone, at least two frames with the image of the vehicle and its number plate are registered, at the beginning and at the end of the control zone. There may be a few frames of one particular vehicle, but for further calculations only two are chosen, where the number plate passes the biggest distance - these are frames of the number plate at the beginning and at the end of the control zone. (ref. fig.2)
3. The number plate corner coordinates are measured in the frame coordinate system at the beginning and at the end of the control zone. The frame, representing the control zone, is Vx pixels wide and Vy pixels high. The value of Vx and Vy are known as these are parameters of the camera sensor. The zero point is placed in the high left corner of the frame, X-axis is directed along the frame width to the right, and Y-axis is directed along the frame height downwards.

    o First frame
    o Reference point (number plate centre) T1(X1; Y1);
    o Low left number plate corner $T1\pi$ (X11; Y11);
    o Low right number plate corner T1r (X1r; Y1r);
    o Last frame
    o Reference point (number plate centre) T2(X2; Y2);
    o Low left number plate corner $T2\pi$ (X2l; Y2l);
    o Low right number plate corner T2r (X2r; Y2r);

4. The number plate point coordinates are converted from the frame coordinate system to the road coordinate system.

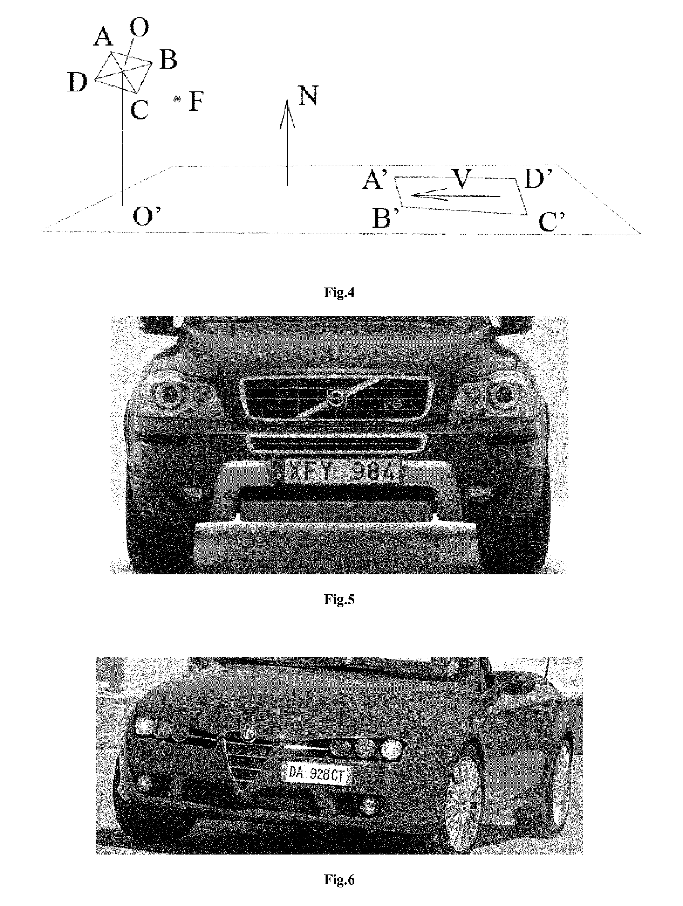

The image on the frame is the image received from the camera sensor. The conversion of each road point in the control zone of the camera to the camera sensor is performed according to the optics laws as shown in fig.3. It is essential to know the positional relationship parameters of the road plane and the camera sensor plane to convert the frame point into a point on the road. In gnomon the coordinates of the camera sensor and the road plane are set. Taking into account the parameters, measured in p.1, the positional relationship of the sensor and the road is adjusted, using the affine transformation (rotation and transfer). As a result, the coordinates of the sensor corners A,B,C and D are measured as well as the focus F coordinates, the road plane vector coordinates N and the distance between the road plane and the sensor centre OO' (ref. fig.4). These data are necessary and sufficient condition for converting the coordinates of any control zone point A'B'C'D' into the coordinates of the matrix ABCD and back.

5. The number plate movement direction in the road coordinate system is calculated. Once the number plate coordinates at the beginning and at the end of the control zone in the road coordinate system are known, the direction of the number plate movement vector in the road plane is defined.

6. The size of the visible image of the number plate in the frame is adjusted in accordance with the vehicle driving direction. Most of the vehicles have the number plate located in the plane, perpendicular to the driving direction, and have horizontal lower edge (ref. fig. 5). However, some vehicle may have the number plate located in a different way, which may provoke mistakes when calculating the width of the number plate. The number plate can be located with an angle to any plane and even with deformation (ref. fig. 6, 7, 8, 9). It is essential to adjust the nonstandard location of the number plate. So in the road coordinate system 4 points are located, that correspond to the corners of the number plate located in a standard way. Using the affine conversion from p.4 (conversion from the road coordinate system to the frame one), the number plate parameters (comer coordinates and side types) are calculated for standard location in the frame coordinate system. Comparing the number plate parameters of standard location with the number plate parameters at the beginning and at the end of the control zone, conclusion concerning the number plate location type is made and the width of the number plate is adjusted taking into account the nonstandard location.

7. The adjusted size of the number plate is compared with the standard size of the number plate, and the height of the number plate moving above the road is calculated. Once the adjusted visible width of the number plate in the frame is known (from p.6) as well as the real width of the standard number plate (the plate size is taken from the reference data for the type of recognized number plate) and using the properties of similar triangles, the height of the number plate located on the vehicle is measured:

$$Hpl = Hc*(1-a/b),$$

where Hpl is the number plate centre point elevation above the road plane;

Hc is the distance between the camera and the road plane;

a is the standard number plate width (from the number plate type description

b is the adjusted number plate width in the frame.

8. Taking into account the height of the number plate location, the number plate point coordinates are converted from the frame coordinate system to the road coordinate system at the height of the number plate is located. Using the affine conversion (p.4), the number plate point coordinates at the beginning and at the end of the control zone are transferred from the frame coordinate system to the road coordinate system, to the plane at the height of the plate movement. Previously an additional plane is imposed - the plane, received by transferring the road plane along its normal at the distance, equal to the number plate location height towards the camera sensor.

9. The distance passed by the number plate is calculated in the number plate movement plane. Once the number plate coordinates at the beginning and at the end of the control zone in the road coordinate system in the plane of the plate movement height (from p.8) are known, the number plate movement vector is calculated. The length of this vector is the distance, passed by the number plate in the control zone.

10. The speed of the plate movement and consequently, the vehicle speed, is calculated using the distance passed by plate and the time, taken for it to perform this move. Once the distance S, passed by the plate is known (from p.9) as well as the period dT to cover this distance (as the difference between the time of the last and the first frame), the plate speed in the control zone is calculated:

$$V=S/dT.$$

As the plate is located firmly on the vehicle, the speed of the plate equals the speed of the vehicle in the control zone.

**Industrial applicability**

The authors of the invention have created a prototype model of the equipment that implements the proposed method. Full-scale test has been made and it proved the possibility of using this method for vehicle speed measurement by a video camera for both speed measurement and for number plate recognition, which helps to make the system of its implementation easier and cheaper.

**Claims**

1.  A method for vehicle speed measurement, which consists in placing a video camera on the vehicle path and saving the frames with the image of the vehicle number plate when it is moving through the camera control zone, which is notable for pre-measuring the camera position parameters relatively to the road plane, saving the frames, obtained at the beginning and at the end of the camera control zone; calculating the period between the first and the last frame; measuring the number plate corner and centre point coordinates in the frame coordinate system at the beginning and at the end of the control zone; converting the number plate corner and centre point coordinates from the frame coordinate system to the road coordinate system taking into account the camera position parameters relatively to the road plane; defining the number plate movement direction in the road coordinate system using the number plate centre point coordinates at the beginning and at the end of the control zone; adjusting the size of the visible number plate image on the frames taking into account the number plate movement direction; comparing the adjusted number plate size with the standard number plate size value and, using the results, calculating the height of the number plate centre point relatively to the road plane; converting the number plate corner and centre point coordinates from the frame coordinate system to the road coordinate system in the plane, parallel to the road plane and located at the height of the number plate centre point; defining the distance passed by the number plate centre point in the plane mentioned; calculating the vehicle speed using the distance passed by number plate centre point and the time, taken for the number plate to perform this move, which corresponds to the period between the first and the last frames.

**Fig.1**

**Fig.2**

**Fig.3**

Fig.4

Fig.5

Fig.6

Fig.7

Fig.8

Fig.9